# EUROPÄISCHE PATENTSCHRIFT

(11) **EP 1 541 448 B1**
(45) Veröffentlichungstag und Bekanntmachung des Hinweises auf die Patenterteilung: **25.10.2006**
(21) Anmeldenummer: 04028502.5
(22) Anmeldetag: 02.12.2004
(51) Int. Cl.: B62D 21/20, B62D 27/02

(54) **Anhängerchassis**
Trailer chassis
Cadre de remorque

(30) Priorität: 10.12.2003 DE 10358070
(43) Veröffentlichungstag der Anmeldung: 15.06.2005
(73) Patentinhaber: Schmitz Gotha Fahrzeugwerke GmbH, 99867 Gotha (DE)
(72) Erfinder: Koch, Josef, 89081 Ulm (DE)
(74) Vertreter: Weber, Gerhard

(56) Entgegenhaltungen:
- DE-A1- 4 240 344
- US-A- 4 958 844
- US-A1- 2004 148 778

## Beschreibung

Die Erfindung betrifft ein Anhängerchassis mit zwei seitlich beabstandeten Haupt-Längsträgern.

Anhängerchassis im Schwerlastbereich enthalten typischerweise zwei in Längsrichtung durchgehende Haupt-Längsträger, welche üblicherweise einen Obergurt, einen Untergurt und einen diese verbindenden vertikalen Steg umfassen, wobei diese Elemente vorzugsweise einen Doppel-T-Querschnitt der Längsträger bilden und vorzugsweise miteinander verschweißt sind. Auf Höhe der vertikalen Stege liegende Querträger und/oder unten an die Untergurte angesetzte Achsstützen sind mit den Längsträgern in Knotenbereichen verbunden und vorzugsweise verschweißt. Zum Abfangen der Kräfte zumindest in stark belasteten Knotenbereichen sind dort üblicherweise Knotenbleche und/oder Stegbleche angeschweißt, welche als Aussteifungen insbesondere quer zu Ober- und Untergurten und den vertikalen Stegen ausgerichtet sind. Das Anschweißen derartiger Aussteifungsbleche ist mit erheblichem Aufwand verbunden.

Die gattungsgemäße DE 42 40 344 A1 beschreibt einen zwischen Chassis und Pritsche eines LKW einzufügenden Hilfsrahmen, dessen beide Längsträger über Querträger verbunden sind. Die Längsträger sind im Längenverlauf aus Abschnitten eines U-Holmes und eines Z-Holmes mit stehenden Stegen in der Art zusammengesetzt sind, dass an der Anschlussstelle von U-Holm und Z-Holm die oberen Schenkel beider Holme koaxial zueinander liegen, die unteren Schenkel und die Stege hingegen quer zur Längsrichtung gegeneinander versetzt sind. Versteifungsplatten sind mit beiden Holmen verschweißt. An der Anschlussstelle den Aussteifungsplatten abgewandt kann ein Querträger vorhanden sein. Die Verbindung eines U-Holms und eines Z-Holms führt zu unterschiedlichen lichten Weiten des Hilfsrahmens im Längenverlauf.

Der vorliegenden Erfindung liegt die Aufgabe zugrunde, ein Anhängerchassis anzugeben, welches mit verringertem Aufwand eine hohe Stabilität in derartigen Knotenbereichen gewährleistet.

Die Erfindung ist im Patentanspruch 1 beschrieben. Die abhängigen Ansprüche enthalten vorteilhafte Ausgestaltungen und Weiterbildungen der Erfindung.

Die Erfindung sieht insbesondere die Unterbrechung des Längsverlaufs des längsparallelen Stegs im Bereich eines Knotens, vorzugsweise eines Knotens mit Anbindung eines Querträgers oder einer Achsstütze, insbesondere beider Elemente, und die Einfügung eines nicht ebenen Formteils in die Unterbrechung vor, wobei das Formteil parallel zum Verlauf der vertikalen Stegs ausgerichtete Flächenkomponenten als auch quer, insbesondere schräg zum Verlauf des vertikalen Stegs ausgerichtete Komponenten aufweise. Es zeigt sich, dass gegenüber dem durchgehend geraden Stegverlauf herkömmlicher Längsträger-Konstruktionen der Herstellungsaufwand beim Schweißen nicht nennenswert erhöht ist und die Kosten der Formteile selbst gering sind, insbesondere wenn diese mit vertikal durchgehend gleichbleibendem Querschnitt, insbesondere als Abschnitte z. B. gewalzter, gekanteter, gezogener oder stranggepresster Profile ausgeführt sind. Hingegen erweisen sich die Vorteile durch Wegfall der angeschweißten Aussteifungsbleche als erheblich, sowohl hinsichtlich der Vorratshaltung oder Herstellung unterschiedlicher Bleche als auch deren einzelne Verschweißung mit den Haupt-Längsträgern und/oder den Querträgern. Zusätzlich können sich Gewichtsvorteile des Formteils gegenüber einer Ausführung mit Aussteifungsblechen ergeben.

Vorteilhafterweise sind zumindest Obergurt oder Untergurt, vorzugsweise beide über die Unterbrechung des Vertikalstegs hinweg in Längsrichtung in ihren Ebenen durchgehend ausgebildet. Obergurt und Untergurt können dabei eingeschweißte Überbrückungsstücke aufweisen, sind aber vorzugsweise ohne Schweißnaht einstückig in Längsrichtung über die Unterbrechung des Vertikalstegs durchgehend. Obergurt und/oder Untergurt weisen vorzugsweise über die Unterbrechung des Vertikalstegs durchgehend gleiche Breiten auf.

Das Formteil weist vorteilhafterweise wenigstens eine zum Längsverlauf des Stegs bzw. Längsträgers bzw. zur Längsachse des Anhängerchassis parallele erste vertikale Fläche auf, welche insbesondere zur Befestigung eines Querträgers vorgesehen sein kann und hierfür vorzugsweise Strukturen für Fügeelemente wie Schrauben, Bolzen, Niete etc. z. B. in Form eines Lochmusters aufweist. Die vertikale Fläche ist vorzugsweise gegen die Ebene des vertikalen Stegs seitlich versetzt. Die vertikale Fläche ist bei Befestigung eines Querträgers mittels Fügeelemente vorteilhafterweise von der dem Querträger abgewandten Seite flächig zugänglich.

Das Formteil weist vorteilhafterweise wenigstens eine schräg zum Längsverlauf des Stegs ausgerichtete weitere parallele Fläche auf, welche im folgenden auch als Verbindungsabschnitt bezeichnet ist und vorzugsweise mit einer Kante an dem vertikalen Steg anschließt, welcher in dem dem Knotenbereich benachbarten Teilabschnitt des Längsträgers in herkömmlicher Bauart vorliegt. Die geneigte Ausrichtung, vorzugsweise in einem Winkel zwischen 30° und 60° gegen den Längsverlauf des vertikalen Stegs, gewährleistet eine stabile, gegen kleine Verformungen oder elastisch nachgiebige und auf diese Art zerstörende Kraftspitzen vermeidende Überleitung von Kräften. Der Verlauf des Verbindungsabschnitts kann auch gekrümmt sein.

Zur weiteren Queraussteifung und/oder zur Verstärkung in Verbindung mit der Anbindung einer Achsstütze kann das Formteil in Fortsetzung eines solchen Verbindungsabschnitts über die Ebene des vertikalen Stegs hinaus fortgeführt sein. Ein solcher Fortsatz ist vorteilhafterweise wiederum schräg zum Längsverlauf des Stegs, insbesondere gegen diesen um einen Winkel zwischen 30° und 60°, vorzugsweise im wesentlichen spiegelbildlich zu dem Verbindungsabschnitt, ausgerichtet.

Vorzugsweise sind zwei an in Längsrichtung entgegengesetzten Enden des Formteils angeordnete und jeweils an dem vertikalen Steg in den benachbarten Teilabschnitten des Längsträgers anschließende und vorzugsweise jeweils mit dem vertikalen Steg verschweißte Verbindungsabschnitte vorgesehen. An ihren der vertikalen Längsfläche zugewandten Kanten können die Verbindungsabschnitte unmittelbar oder über einen zusätzlichen Aussteifungsabschnitt an die Längsfläche anschließen, wobei ein solcher Aussteifungsabschnitt vorzugsweise wenigstens einen gegen den Verbindungsabschnitt und gegen die Längsfläche geneigten, vorzugsweise abgewinkelten Flächenabschnitt aufweist.

Das Formteil nimmt quer zur Längsrichtung der Längsträger vorzugsweise wenigstens 60 %, insbesondere wenigstens 80 % der Breite von Obergurt oder Untergurt ein. Das Formteil geht vorteilhafterweise in Längsrichtung vollständig zwischen Obergurt und Untergurt durch und ist vorteilhafterweise mit beiden verschweißt.

Für die Befestigung eines Querträgers mittels Fügeelementen an der vertikalen Längsfläche des Formteils weist eine am Ende des Längsträgers angeschweißte Platte, insbesondere eine Ringplatte, eine vertikale Ringfläche als Befestigungsfläche mit der Längsfläche des Formteils auf, wobei die Befestigungsfläche gegen die Ebene der Verbindung, insbesondere Verschweißung der Platte mit dem Querträger versetzt ist. Befestigungsstrukturen, insbesondere ein zu der Befestigungsstruktur in der Längsfläche des Formteils korrespondierendes Lochmuster, sind in der ringförmigen Befestigungsfläche der Platte vorgesehen. Vorzugsweise sind die Auflageflächen für die Fügeelemente in der Befestigungsfläche von der Längsfläche des Formteils weg aufgewölbt. Die nichtebene Ausführung der Befestigungsplatte und/oder die Aufwölbung der Auflageflächen verringern Belastungsspitzen der Kraftüberleitung zwischen Querträgern und Längsträgern.

In wenigstens einem Knotenbereich ist vorteilhafterweise an der Unterseite des Untergurtes eines Längsträgers eine Vorrichtung zur Anbindung eines Fahrwerks des Anhängerchassis befestigt, insbesondere angeschweißt. Vorteilhafterweise fällt der Verlauf der Vorrichtung an der Unterseite des Untergurtes über wenigstens 40 % des Umfangs, vorzugsweise überwiegend mit dem Verlauf des Umfangs des Formteils zumindest annähernd mit einer Abweichung von weniger als der dreifachen Wandstärke des Formteils zusammen, was die Kraftüberleitung zwischen Vorrichtung und Längsträger günstig beeinflusst.

Die Vorrichtung zur Anbindung eines Fahrwerks ist vorteilhafterweise unterteilt in einen an der Unterseite des Untergurtes eines Längsträgers angeschweißten Flansch geringer Höhe und eine mit dem Flansch über Fügeelemente verbundene, nach unten weisende Achsstütze. Die vertikale Erstreckung des Flan' sches ist vorteilhafterweise geringer als die Höhe der Achsstütze. Eine an sich gebräuchliche Schrägabstützung der Achsstütze gegen einen am selben Knotenbereich befestigten Querträger erfolgt dann vorteilhafterweise in Form einer unterteilten Querstrebe mit einem am Querträger befestigten, insbesondere verschweißten ersten Abschnitt und einem an der Achsstütze befestigten zweiten Abschnitt, welche vorteilhafterweise über Fügeelemente verbunden sind, wobei vorzugsweise der erste Abschnitt kürzer ist als der zweite Abschnitt.

Eine besonders vorteilhafte Ausführung einer Schrägaussteifung zwischen einer Achsstütze und einem Querträger sieht vor, dass eine Schrägstrebe an ihrem oberen Ende mit dem Querträger verbunden ist und die Krafteinleitung, insbesondere deren Maximum oder Schwerpunkt, in die Achsstütze bzw. den Lenkerbolzen in einem engen Bereich um das der Fahrzeugmitte zugewandte Lager der Achsstütze für den Lenkerbolzen eines in der Achsstütze gehaltenen Achslenkers, vorzugsweise nicht mehr als 50 mm, insbesondere nicht mehr als 30 mm von der Bolzenachse beabstandet erfolgt. Die Schrägstrebe kann hierfür im Bereich des Lenkerbolzenlagers der Achsstütze mit dieser verbunden, insbesondere verschweißt oder verschraubt sein. In einer vorteilhaften Ausführungsform weist die Schrägstrebe an ihrem unteren, der Achsstütze zuweisenden Ende ihrerseits eine Lageröffnung für den Lenkerbolzen auf. Die Krafteinleitung erfolgt dann vorteilhafterweise unmittelbar am Bolzenlager der Achsstütze und über den Bolzen selbst. Vorzugsweise ist die Schrägstrebe an ihrem der Achsstütze zuweisenden Ende mit einem Lagerkörper verbunden, insbesondere verschweißt. Der Lagerkörper weist eine Lageröffnung für den Lenkerbolzen auf. Die Lageröffnung ist vorzugsweise an einer an der Achsstütze anliegenden Fläche ausgebildet. Die Schrägstrebe weist vorteilhafterweise zumindest an ihrem dem Lagerkörper zugewandten Abschnitt eine zentrale Kraftlinie entlang einer Mittellängsachse auf, deren Verlängerung vorteilhafterweise durch den Lenkerbolzen, vorzugsweise zumindest annähernd durch dessen Mittellängsachse, insbesondere im Bereich der Lageröffnung geht. Eine derartige Schrägaussteifung einer Achsstütze ist insbesondere auch unabhängig von dem Formteil und von der speziellen Ausführung der Achsstütze vorteilhaft realisierbar.

Die Erfindung ist nachfolgend anhand eines bevorzugten Ausführungsbeispiels unter Bezugnahme auf die Abbildungen noch eingehend erläutert. Dabei zeigt:
- Fig. 1: eine Querträgeranbindung in Seitenansicht,
- Fig. 2: einen Schnitt zu Fig. 1,
- Fig. 3: eine Draufsicht auf Fig. 1,
- Fig. 4: eine Draufsicht mit anderer Ausführung eines Formteils,
- Fig. 5: Fig. 1 mit zusätzlich montierter Achsstütze,
- Fig. 6: einen Schnitt zu Fig. 5,
- Fig. 7: eine Draufsicht zu Fig. 5,
- Fig. 8: Draufsicht und Seitenansicht eines Anhängerchassis.

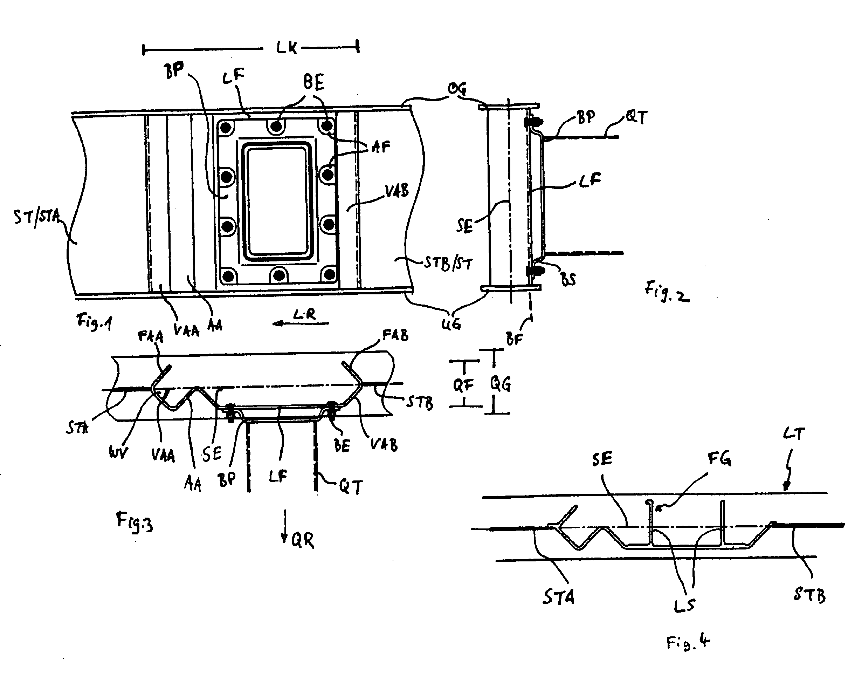

Bei der in Fig. 1 bis Fig. 3 in unterschiedlichen Ansichten dargestellten Anordnung ist ein Querträger QT auf Höhe des Längsträgers an diesem befestigt. Der Querträger ist hierfür an seinem dem Querträger zugewandten Ende mit einer Befestigungsplatte BP verschweißt. Die Befestigungsplatte ist vorteilhaftterweise nicht-eben in der Art, dass die Schweißnähte zur Verbindung der Befestigungsplatte mit dem Querträger gegen eine ebene Befestigungsfläche BF in der Ansicht nach Fig. 1 bis Fig. 3, welche außerhalb des Querschnittsprofils des Querträgers liegt und vorzugsweise dieses Querschnittsprofil ringförmig geschlossen umgibt und welche mit einem Lochmuster für Fügeelemente versehen ist, durch eine Stufe in der Befestigungsplatte in Richtung vom Längsträger weg versetzt sind. Zusätzlich können die Auflageflächen AF der Befestigungsfläche, auf welchen sich die Befestigungselemente BE abstützen, aus der Befestigungsfläche in Richtung vom Längsträger weg gewölbt sein. Befestigungsplatte und/oder Befestigungsfläche mit Auflageflächen AF können auch eben ausgeführt sein. Als Befestigungselemente können insbesondere Niete, Bolzen oder Schrauben eingesetzt sein.

Der Längsträger LT ist über seinen überwiegenden Verlauf in Längsrichtung LR durch eine Schweißkonstruktion mit einem horizontalen Obergurt OG, einem horizontalen Untergurt UG und einem zwischen diesen liegenden vertikalen Steg ST gebildet, wobei Obergurt und Untergurt in Längsrichtung im wesentlichen gleich verlaufen und der Steg vorzugsweise in Querrichtung zumindest annähernd in der Mitte von Obergurt und Untergurt liegt und der Längsträger somit im Querschnitt ein Doppel-T-Profil zeigt.

In dem in Fig. 1 bis Fig. 3 gezeigten kurzen Abschnitt des Längsträgers in Längsrichtung mit dem Knotenbereich zur Anbindung des Querträgers QT ist der vertikale Steg ST über eine Länge LK unterbrochen und in in Längsrichtung angrenzenden Bereichen durch Abschnitte STA, STB repräsentiert. Die Lücke zwischen den Abschnitten STA und STB ist überbrückt durch ein nicht-ebener Formteil, welches sich über die gesamte Höhe HS des Stegs zwischen Obergurt und Untergurt erstreckt und mit beiden verbunden, insbesondere verschweißt ist. Das Formteil FT schließt insbesondere auch an die vertikalen Kanten der Stegabschnitte STA, STB bei der Lücke an und ist dort mit den Stegabschnitten verschweißt.

Das Formteil weist in dem in Fig. 1 bis Fig. 3 skizzierten Beispiel entlang des aus Fig. 3 ersichtlichen Verlaufs eine im wesentlichen konstante Wandstärke auf. Das Formteil weist vorteilhafterweise zwischen zwei Enden in dem aus Fig. 3 ersichtlichen Verlauf keine Verzweigungen, Queransätze oder dergleichen auf und ist daher vorteilhafterweise aus einem ebenen Ausgangsmaterial, insbesondere einem Blech, durch Verformen, vorzugsweise Walzen oder insbesondere Abkanten herstellbar.

Das in Fig. 1 bis Fig. 3 skizzierte Formteil kann insbesondere einstückig in sich die folgenden Elemente aufweisen, welche einzeln oder vorzugsweise gemeinsam realisiert sind
a) eine im wesentlichen zur Längsrichtung LR parallele vertikale Längsfläche LF zur Befestigung des Querträgers QT. Die Längsfläche weist für eine Querträgerbefestigung mittels Fügeelementen eine Befestigungsstruktur in Form eines Lochmusters für die Fügeelemente auf. Die Längsfläche ist vorzugsweise durchgehend eben ohne zusätzliche Aussteifungen. Die Längsfläche ist vorteilhafterweise gegen die Ebene SE des vertikalen Stegs des Längsträgers seitlich versetzt in Richtung des Querträgers QT,
b) wenigstens einen, vorzugsweise zu jedem Stegabschnitt STA, STB je einen Verbindungsabschnitt VAA, VAB zum Anschluss an die Stegabschnitte STA, STB des Längsträgers, welche den Stegabschnitten abgewandt direkt oder über einen Zwischenabschnitt zu der Längsfläche LF führen. Die Verbindungsabschnitte bilden vorteilhafterweise im wesentlichen ebene vertikale Flächen und sind vorzugsweise um einen Winkel WV zwischen 30° und 60°, insbesondere ca. 45° gegen die Stegebene SE bzw. die Längsrichtung LR geneigt ausgerichtet. Die geneigte Ausrichtung gewährleistet eine Stabilisierung auch in Querrichtung und eine Kraftüberleitung zwischen der Längsfläche bzw. dem an dieser befestigten Querträger und dem Längsträger, insbesondere dem vertikalen Steg mit geringer Spitzenbelastung,
c) einen oder zwei Fortsatzabschnitte FAA, FAB, welche das Formteil nach den Verbindungsabschnitten VAA, VAB über den Anschluss an die vertikalen Kanten der Stegabschnitte hinaus verlängern und Obergurt und Untergurt auf größerer Breite abstützen. Die Fortsatzabschnitte sind vorteilhafterweise als im wesentlichen vertikale ebene Flächen gegen die Stegebene SE geneigt, wobei der Neigungswinkel vorzugsweise zumindest annähernd gleich dem Winkel WV der Verbundabschnitte sind und die Fortsatzabschnitte FAA, FAB im wesentlichen zu den Verbindungsabschnitte VAA, VAB spiegelsymmetrisch bezüglich der Stegebene SE liegen,
d) einen oder mehrere Aussteifungsabschnitte, welche wie der Aussteifungsabschnitt AA insbesondere zwischen der Längsfläche LF und einem Verbindungsabschnitt VAA liegen können. Ein Aussteifungsabschnitt kann insbesondere an einer Position mit besonderer mechanischer Belastung des Längsträgers und/oder des Formteils vorgesehen sein. Der Aussteifungsabschnitt AA im skizzierten Beispiel berücksichtigt die Möglichkeit, in einer anhand eines weiteren Ausführungsbeispiels noch eingehend erläuterten Weise, insbesondere über eine mit dem Längsträger verbundene Vorrichtung, ein Achsaggregat eines Fahrwerks anzubinden.

Das Formteil ist vorzugsweise auf der dem Querträger abgewandten Seite der Längsfläche offen, so dass zum einen die Befestigungsstrukturen zum Einsetzen der Fügeelemente gut zugänglich sind und weiter gegenüber einer umlaufend geschlossenen Form die Herstellung des Formteils durch Abkanten vereinfacht und das Gewicht des Formteils verringert ist. Die Erstreckung QF des Formteils in Querrichtung beträgt vorteilhafterweise wenigstens 60%, insbesondere wenigstens 80% der Breite QG von Obergurt bzw. Untergurt

Während das in Fig. 1 bis Fig. 3 skizzierte Formteil durch Verformen, insbesondere Abkanten eines ebenen Blechs herstellbar bzw. hergestellt ist, ist das in Fig. 4 skizzierte Formteil FG als Gußteil, insbesondere als Abschnitt eines gegossenen Strangprofils, beispielsweise bei Längsträgern aus Aluminium auch aus Aluminium, ausgeführt. Das Formteil kann auch vorteilhaft als Schmiedeteil ausgeführt sein. Das Guss-Formteil FG enthält weitgehend die gleichen Elemente wie das Formteil nach Fig. 1 bis Fig. 3, wobei für die Verbindung mit den Kanten der benachbarten Stegabschnitte kurze Ansatzstücke vorgesehen sein können und der Bereich der Anbindung des Querträgers durch quer verlaufende Stützstege LS an der dem Querträger abgewandten Seite der Längsfläche verstärkt ist.

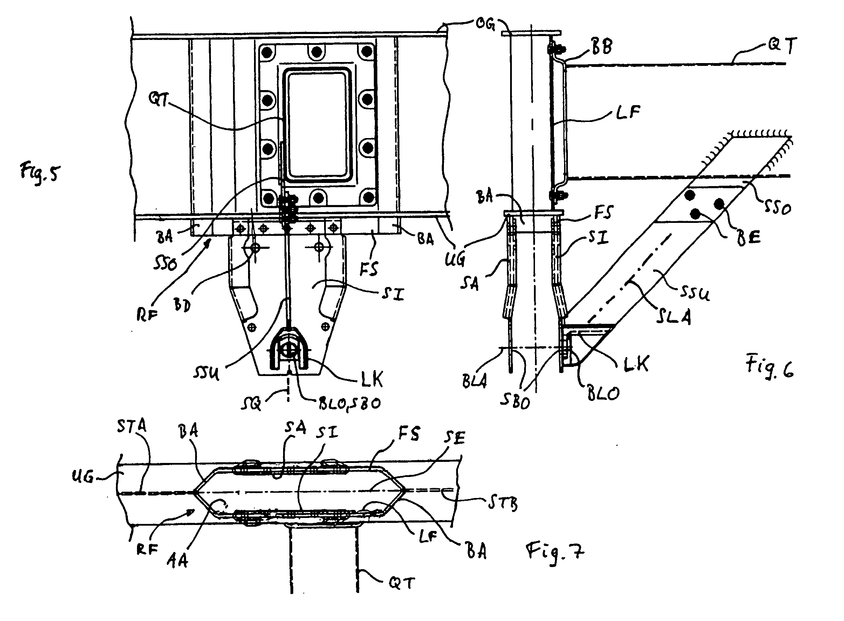

In Fig. 5 bis Fig. 7 ist in den Fig. 1 bis Fig. 3 entsprechenden Ansichten eine vorteilhafte Weiterbildung mit einer Vorrichtung zur Anbindung eines Fahrwerks skizziert, welche besonders günstig mit der Anbindung eines Querträgers in demselben Knotenbereich des Längsträgers verknüpfbar ist.

Die Vorrichtung zur Anbindung eines Fahrwerks weist einen an die Unterseite der Untergurte UG des Längsträgers angeschweißten Flansch RF auf, welcher vorzugsweise einen im wesentlichen geschlossenen Ring mit zwei zur Längsrichtung LR parallelen Seitenabschnitten FS sowie frontseitig und heckseitig entgegengesetzt an die Seitenabschnitte anschließenden Brückenabschnitten BA enthält. Die Brückenabschnitte bilden vorteilhafterweise je einen von den Seitenteilen nach vorne bzw. hinten weg weisenden Winkel, dessen Spitze vorzugsweise in der Stegebene SE liegt.

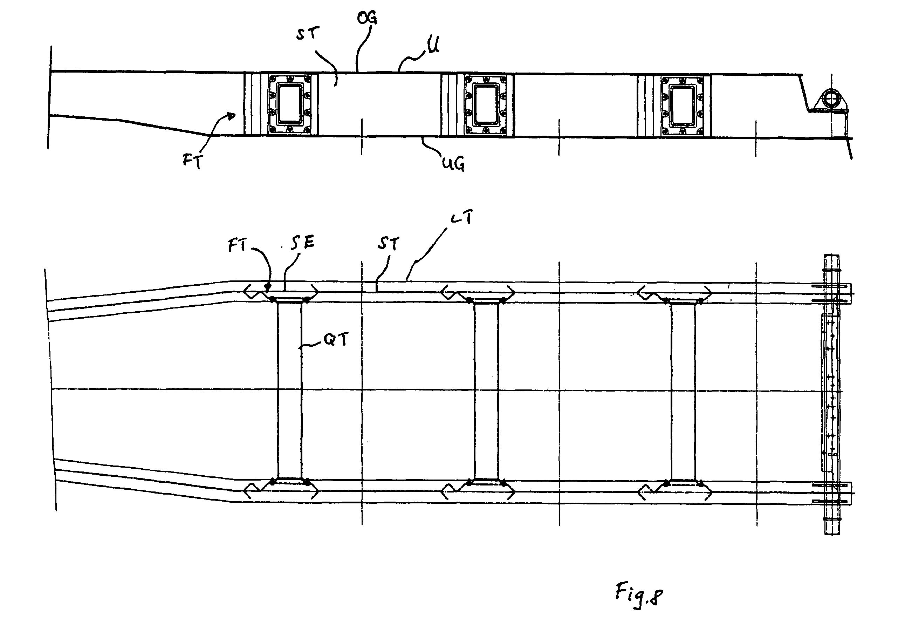

Vorzugsweise folgt der Verlauf des Flansches an der Unterseite des Untergurtes weitgehend dem Verlauf des Formteils auf der Oberseite des Untergurtes, insbesondere fallen vorteilhafterweise die Verbindungsabschnitte VAA, VAAB und die Längsfläche LF des Formteils, vorzugsweise auch die Fortsatzabschnitte FAA, FAB, in vertikaler Projektion wie in der Ansicht nach Fig. 7 annähernd mit dem Verlauf des Flansches RF zusammen. Die seitliche Abweichung der Verläufe vom Flansch RF und Formteil FT beträgt vorteilhafterweise weniger als die dreifache Wandstärke des Flansches.

Die Vorrichtung zur Anbindung eines Fahrwerk-Aggregats umfasst in an sich gebräuchlicher Weise eine vom Längsträger nach unten ragende Achsstütze, welche zur Fahrzeugmitte hin durch eine schräge Strebe an einem Querträger abgestützt ist. Vorzugsweise ist die Achsstütze in einen Befestigungsflansch geringer Höhe und einer an diesem über Fügeelemente befestigten und weiter nach unten ragenden Stützkonstruktion und die schräge Strebe in einen oberen Abschnitt SSO und einen mit diesem über Fügeelemente verbundenen unteren Abschnitt SSU unterteilt. Der obere Abschnitt SSO ist vorzugsweise mit de Querträger verschweißt. Daraus ergibt sich für den Fahrgestellrahmen mit Längsträger und Querträger sowie angeschweißtem Flansch RF und oberem Strebenabschnitt SSO eine wesentlich geringere Bauhöhe gegenüber der vollständig montierten Achsstütze. Die geringe Bauhöhe kann insbesondere bei der Oberflächenbehandlung mehrerer Chassis in Tauchbädern und/oder beim Transport des Chassis ohne eigenes Fahrwerk von erheblichem Vorteil sein. Durch die Verbindung der Achsstützenkonstruktion mit dem Flansch FR und dem oberen Strebenabschnitt SSO mittels Fügeelementen und den Verzicht auf Schweißverbindungen an diesen Verbindungsstellen kann das Chassis mit einer vollständigen Oberflächenbehandlung, insbesondere einem Korrosionsschutz vorbereitet in der erwähnten vorteilhaft geringen Bauhöhe vorgefertigt und später durch die Achsstützkonstruktion vervollständigt werden. Die Achsstützkonstruktion weist insbesondere Vorrichtungen für die Anlenkung eines gefederten Achslenkers über einen Lenkerbolzen auf.

Die Achsstützkonstruktion besteht im skizzierten Beispiel vorteilhafterweise aus zwei gleichen Stützscheiben SI, SA, wobei an der inneren, d. h. zur Fahrzeugmitte hin gelegenen Stützscheibe SI noch ein Anschluß LK für die Schrägstrebe vorgesehen ist. Die Achsscheiben sind vorzugsweise in sich spiegelsymmetrisch bezüglich einer vertikalen Spiegelebene SQ in Querrichtung aufgebaut, so dass für äußere Stützscheibe SA und innere Stützscheibe SI gleiche Bauteile verwandt werden können. In den Stützscheiben sind Lagerbohrungen SBO für einen Lenkerbolzen zur Anlenkung eines Achslenkers vorgesehen.

Besonders vorteilhaft ist die Befestigung der Schrägstrebe an ihrem unteren Ende mit der Achsstütze mit Krafteinleitung unmittelbar im Bereich des Bolzenlagers der Achsstütze bzw. über den Bolzen selbst. Die Schrägstrebe kann hierfür z. B. in einem engen Bereich um die Lageröffnung in der Achsstütze für den Lenkerbolzen mit der Achsstütze verbunden, insbesondere verschweißt oder verschraubt oder gegen die Achsstütze verspannt sein, insbesondere über den Lenkerbolzen selbst. Der Schwerpunkt der Verschraubung oder Verschweißung liegt vorteilhafterweise maximal 50 mm, insbesondere maximal 30 mm von der Bolzenachse radial beabstandet. Vorteilhafterweise ist am unteren Ende der Schrägstrebe in einer gegen die innere Stützscheibe der Achsstütze verspannten oder an dieser befestigten Fläche der Schrägstrebe oder eines mit dieser verbundenen Bauteils eine Lageröffnung für den Lenkerbolzen hergestellt, welche den Bolzen umgreift. Im skizzierten bevorzugten Beispiel ist hierfür ein Lagerkörper LK mit dem unteren Ende der Schrägstrebe bzw. deren unterem Abschnitt SSU verbunden, insbesondere verschweißt. Der Lagerkörper weist eine zu der inneren Stützscheibe parallele Fläche auf, in welcher eine Lageröffnung BLO für einen Lenkerbolzen ausgespart ist. Der Lenkerbolzen sei in der Skizze durch seine Mittellängsachse BLA angedeutet und repräsentiert. Durch Verspannen eines durch die Lageröffnung BLO und die Lagerbohrungen SBO der Stützscheiben geführten Lenkerbolzens, welcher z. B. mit einem Bund auf dem Rand um die Lageröffnung BLO anliegt, wird der Lagerkörper in Richtung der Bolzenachse BLA fest gegen die innere Stützscheibe gedrückt. Durch eine enge Passung der Lageröffnung BLO und der Lagerbohrung SBO in der inneren Stützscheibe ist der Lagerkörper in definierter unveränderbarer Position bezüglich der Achsstütze. Von besonderem Vorteil ist, dass die von der Schrägstrebe aufgenommenen Kräfte zur Schrägaussteifung über den Lagerkörper direkt in den Lagerbereich der Achsstütze und in den Lenkerbolzen eingeleitet werden und umgekehrt. Insbesondere ist es vorteilhaft, wenn eine Mittellängsachse SLA der Schrägstrebe bzw. dem unteren Abschnitt SSU mit ihrer Verlängerung durch den Lenkerbolzen, vorzugsweise zumindest annähernd durch dessen Mittellängsachse BLA geht. Das ist z. B. insbesondere erfüllt, wenn die Schrägstrebe eine ebene langgestreckte Platte mit vorzugsweise vertikaler Plattenebene ist und die Bolzenlängsachse BLA in dieser vertikalen Ebene liegt, welche im Beispiel vorteilhaft mit der Spiegelebene SQ zusammenfällt. Eine besonders vorteilhafte Kraftüberleitung ergibt sich, wenn die Verlängerung der Mittelachse SLA der Schrägstrebe den Lenkerbolzen bzw. dessen Mittellängsachse BLA im Bereich der Lageröffnung BLO trifft. Die vorteilhafte Kraftüberleitung über den Lagerkörper gilt auch für Anordnungen mit anderer Ausführung der Achsstütze oder deren Anbindung an den Längsträger.

Die Stützscheiben können Befestigungsstrukturen BD, insbesondere Bohrungen, zur Aufnahme der Abstützung eines Schwingungsdämpfers aufweisen. Die zusätzliche Belastung durch die Abstützung des Schwingungsdämpfers wird im Längsträger vorteilhaft durch den Aussteifungsabschnitt AA wie zu Fig. 1 bis Fig. 5 ausführlich beschrieben abgefangen, ohne dass die Wandstärke des Formteils insgesamt auf diese zusätzliche Belastung ausgelegt sein müsste. Die Stützscheiben weisen im skizzierten Beispiel in einem oberen Bereich durch Umbiegung stabilisierte Randbereiche auf, wobei durch die Umbiegung zusätzlich in den Randbereichen ein Umgreifen der Wand des Flansches RF durch eine Stützscheibe erfolgt.

In Fig. 8 ist ein Teil eines Anhängerchassis für einen heckseitig kippbaren Muldenbehälter in Draufsicht und in Seitenansicht skizziert, bei welchem im hinteren Chassisabschnitt, in welchem auch das mehrachsige Fahrwerk angeordnet ist, die Querträger zwischen den Längsträgern angeordnet und jeweils über ein Formteil der zu Fig. 1 bis Fig. 3 beschriebenen Art an die Längsträger angebunden sind. Der in vertikaler Richtung gleichbleibende Querschnitt bedeutet auch Spiegelsymmetrie der Formteile bezüglich einer horizontalen Mittelebene und ermöglicht in Verbindung mit einem zu einer solchen horizontalen Mittelebene spiegelsymmetrischen Lochbild der Befestigungsstrukturen die Beschränkung auf nur eine einbaufertig vorbereitete Ausführung solcher Formteile für beide Längsträger.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen fachmännischen Könnens in mancherlei Weise abwandelbar. Insbesondere ist der Verlauf der Kontur des Formteils im Detail einer großen Variationsbreite zugänglich.

## Patentansprüche

1. Anhängerchassis mit zwei seitlich beabstandeten Hauptlängsträgern, welche zumindest in einem hinteren Trägerabschnitt, insbesondere im Bereich des Fahrwerks des Anhängers in ihrem überwiegenden Längsverlauf einen Obergurt (OG), einen Untergurt (UG) und einen diese verbindenden, zum Längsverlauf von Obergurt und Untergurt im wesentlichen parallel verlaufenden flachen vertikalen Steg (ST) aufweisen und welche an Knoten mit Querträgern (QT) und/oder Achsstützen verbunden sind, **dadurch gekennzeichnet, dass** im Bereich wenigstens eines Knotens der Steg (ST) in seinem durchgehend längsparallelen Verlauf über eine Länge (LK) durch eine Lücke unterbrochen und durch ein Formteil (FT, FG) ersetzt ist, welches sowohl Flächen mit parallel als auch Flächen mit quer zum Längsverlauf des vertikalen Stegs ausgerichteten Komponenten aufweist und die Lücke zwischen in Längsrichtung angrenzenden Stegabschnitten (STA, STB) überbrückt.

2. Anhängerchassis nach Anspruch 1, **dadurch gekennzeichnet, dass** das Formteil (FT) wenigstens eine zum Längsverlauf (LV) des Längsträgers (LT) parallel verlaufende Längsfläche (LF) aufweist.

3. Anhängerchassis nach Anspruch 1 oder 2, **dadurch gekennzeichnet, dass** das Formteil (FT) wenigstens einen gegen den Längsverlauf (LV) des Längsträgers (LT) geneigten Verbindungsabschnitt (VAA, VAB) aufweist.

4. Anhängerchassis nach Anspruch 3, **dadurch gekennzeichnet, dass** der Verbindungsabschnitt an den Steg (STA, STB) in einem dem Knotenbereich (KN) benachbarten Teilabschnitt des Längsträgers anschließt.

5. Anhängerchassis nach Anspruch 3 oder 4, **dadurch gekennzeichnet, dass** der Verbindungsabschnitt (VAA, VAB) im Mittel um einen Winkel (WV) zwischen 30° und 60° gegen den Längsverlauf (LV) des Längsträgers geneigt verläuft.

6. Anhängerchassis nach einem der Ansprüche 3 bis 4, **dadurch gekennzeichnet, dass** der Verbindungsabschnitt über die Ebene (SE) des Stegs (STA, STB) hinaus durch einen Fortsatzabschnitt (FAA, FAB) des Formteils fortgesetzt ist.

7. Anhängerchassis nach Anspruch 6, **dadurch gekennzeichnet, dass** der Fortsatzabschnitt (FAA, FAB) im Mittel um einen Winkel (WF) zwischen 30° und 60° gegen den Längsverlauf des Längsträgers geneigt verläuft.

8. Anhängerchassis nach einem der Ansprüche 3 bis 7, **dadurch gekennzeichnet, dass** der Verbindungsabschnitt (VAA, VAB) unmittelbar oder über einen Aussteifungsabschnitt an eine Längsfläche anschließt.

9. Anhängerchassis nach Anspruch 8, **dadurch gekennzeichnet, dass** der Aussteifungsabschnitt (AA) eine gegen Verbindungsabschnitt und gegen Längsfläche abgewinkelte Fläche aufweist.

10. Anhängerchassis nach einem der Ansprüche 3 bis 9, **dadurch gekennzeichnet, dass** in Längsrichtung entgegengesetzt zwei Verbindungsabschnitte (VAA, VAB) vorgesehen sind.

11. Anhängerchassis nach einem der Ansprüche 1 bis 10, **dadurch gekennzeichnet, dass** die Längsfläche (LF) seitlich gegen die Ebene (SE) des Stegs versetzt ist.

12. Anhängerchassis nach einem der Ansprüche 1 bis 11, **dadurch gekennzeichnet, dass** das Formteil quer zum Längsverlauf wenigstens 60 %, insbesondere wenigstens 80 % der durch Obergurt und Untergurt gegebenen Breite des Längsträgers einnimmt.

13. Anhängerchassis nach einem der Ansprüche 1 bis 12, **dadurch gekennzeichnet, dass** sich das Formteil vollständig zwischen Obergurt und Untergurt vertikal durchgehend erstreckt.

14. Anhängerchassis nach einem der Ansprüche 1 bis 13, **dadurch gekennzeichnet, dass** das Formteil einen vertikal gleichbleibenden Querschnitt aufweist.

15. Anhängerchassis nach einem der Ansprüche 1 bis 14, **dadurch gekennzeichnet, dass** das Formteil durch Verformen aus einer ebenen Platte herstellbar ist.

16. Anhängerchassis nach einem der Ansprüche 1 bis 14, **dadurch gekennzeichnet, dass** das Formteil als Guss- und/oder Schmiedeteil ausgeführt ist.

17. Anhängerchassis nach einem der Ansprüche 1 bis 16, **dadurch gekennzeichnet, dass** das Formteil mit Obergurt, Untergurt und Steg verschweißt ist.

18. Anhängerchassis nach einem der Ansprüche 1 bis 17, **dadurch gekennzeichnet, dass** in wenigstens einem Knotenbereich ein Querträger über Fügeelemente mit dem Formteil verbunden ist.

19. Anhängerchassis nach Anspruch 18, **dadurch gekennzeichnet, dass** Bohrungen für die Fügeelemente in der Längsfläche des Formteils vorliegen.

20. Anhängerchassis nach Anspruch 18 oder 19, **dadurch gekennzeichnet, dass** der Querträger eine Befestigungsplatte (BP) mit einer im wesentlichen vertikalen Befestigungsfläche (BF) aufweist.

21. Anhängerchassis nach Anspruch 20, **dadurch gekennzeichnet, dass** die Befestigungsplatte abgestuft ausgeführt ist und die Befestigungsfläche gegen die Ebene der Verbindung der Befestigungsplatte mit dem Querträger zum Formteil hin versetzt liegt.

22. Anhängerchassis nach Anspruch 21, **dadurch gekennzeichnet, dass** die Auflageflächen (AF) für die Fügeelemente aus der Befestigungsfläche aufgewölbt liegen.

23. Anhängerchassis nach einem der Ansprüche 1 bis 22, **dadurch gekennzeichnet, dass** in wenigstens einem Knotenbereich an der Unterseite des Untergurtes des Längsträgers eine Vorrichtung zur Anbindung eines Fahrwerks angeschweißt ist.

24. Anhängerchassis nach Anspruch 23, **dadurch gekennzeichnet, dass** die Verbindungslinien des Untergurts des Längsträgers mit dem Formteil einerseits und mit der Vorrichtung andererseits in vertikaler Projektion in ihrem überwiegenden Verlauf zumindest annähernd zusammenfallen.

25. Anhängerchassis nach Anspruch 23 oder 24, **dadurch gekennzeichnet, dass** die Vorrichtung einen mit dem Untergurt verschweißten Flansch (RF) und eine an diesem über Fügeelemente befestigte nach unten weisende Achsstütze (SI, SA) aufweist.

26. Anhängerchassis nach Anspruch 25, **dadurch gekennzeichnet, dass** eine von der Achsstütze zum Querträger führende Schrägstrebe einen ersten (SSO), mit dem Querträger verschweißten, und einen zweiten (SSU), mit der Achsstütze verbundenen Abschnitt aufweist, und dass erster und zweiter Abschnitt über Fügeelemente verbunden sind.

27. Anhängerchassis nach Anspruch 26, **dadurch gekennzeichnet, dass** der zweite Abschnitt mit einem Lagerkörper für einen in der Achsstütze gelagerten, im wesentlichen horizontalen Lenkerbolzen verbunden ist.

28. Anhängerchassis nach Anspruch 27, **dadurch gekennzeichnet, dass** die Verlängerung der Mittellängsachse des zweiten Teils der Schrägstrebe durch den Lenkerbolzen vorzugsweise durch dessen Mittellängsachse geht.

29. Anhängerchassis nach einem der Ansprüche 26 bis 28, **dadurch gekennzeichnet, dass** der untere Abschnitt der Schrägstrebe länger ist als der obere Abschnitt.

30. Anhängerchassis nach einem der Ansprüche 1 bis 29, **dadurch gekennzeichnet, dass** Obergurt und/oder Untergurt über die Unterbrechung des Stegs in Längsrichtung durchgehend ausgeführt sind.

## Claims

1. Trailer chassis having two main longitudinal members which are spaced apart from one another laterally and which have, at least in a rear member section, in particular in the region of the running gear of the trailer, an upper cord (OG), a lower cord (UG) in the main part of their longitudinal extent, and a flat vertical web (ST) which connects them and extends essentially parallel to the longitudinal profile of the upper cord and lower cord, and which main longitudinal members are connected to nodes with crossmembers (QT) and/or axle supports, **characterized in that** in the region of at least one node the web (ST) is interrupted in its continuously longitudinal-parallel profile by a gap over a certain length (LK) and is replaced by a shaped part (FT, FG) which has both faces with components which are oriented in parallel with the longitudinal profile of the vertical web, and faces which are oriented transversely with respect to the longitudinal profile of the vertical web, and spans the gap between web sections (STA, STB) which are adjacent in the longitudinal direction.

2. Trailer chassis according to Claim 1, **characterized in that** the shaped part (FT) has at least one longitudinal face (LF) which extends in parallel with the longitudinal profile (LV) of the longitudinal carrier (LT).

3. Trailer chassis according to Claim 1 or 2, **characterized in that** the shaped part (FT) has at least one connecting section (VAA, VAB) which is inclined with respect to the longitudinal profile (LV) of the longitudinal carrier (LT).

4. Trailer chassis according to Claim 3, **characterized in that** the connecting section adjoins the web (STA, STB) in a partial section of the longitudinal carrier which is adjacent to the node region (KN).

5. Trailer chassis according to Claim 3 or 4, **characterized in that** the connecting section (VAA, VAB) extends inclined on average by an angle (WV) between 30° and 60° with respect to the longitudinal profile (LV) of the longitudinal carrier.

6. Trailer chassis according to one of Claims 3 to 4, **characterized in that** the connecting section is continued beyond the plane (SE) of the web (STA, STB) by a continuing section (FAA, FAB) of the shaped part.

7. Trailer chassis according to Claim 6, **characterized in that** the continuing section (FAA, FAB) extends on average inclined by an angle (WF) between 30° and 60° with respect to the longitudinal profile of the longitudinal member.

8. Trailer chassis according to one of Claims 3 to 7, **characterized in that** the connecting section (VAA, VAB) adjoins a longitudinal face directly or via a reinforcing section.

9. Trailer chassis according to Claim 8, **characterized in that** the reinforcing section (AA) has a face which is at an angle to the connecting section and to the longitudinal face.

10. Trailer chassis according to one of Claims 3 to 9, **characterized in that** two connecting sections (VAA, VAB) are provided opposite one another in the longitudinal direction.

11. Trailer chassis according to one of Claims 1 to 10, **characterized in that** the longitudinal face (LF) is offset laterally with respect to the plane (SE) of the web.

12. Trailer chassis according to one of Claims 1 to 11, **characterized in that**, in the transverse direction with respect to the longitudinal profile, the shaped part takes up at least 60%, in particular at least 80%, of the width of the longitudinal member made up of the upper cord and lower cord.

13. Trailer chassis according to one of Claims 1 to 12, **characterized in that** the shaped part extends completely between the upper cord and the lower cord in a vertically continuous fashion.

14. Trailer chassis according to one of Claims 1 to 13, **characterized in that** the shaped part has a cross section which is constant in the vertical direction.

15. Trailer chassis according to one of Claims 1 to 14, **characterized in that** the shaped part can be manufactured by shaping from a planar plate.

16. Trailer chassis according to one of Claims 1 to 14, **characterized in that** the shaped part is embodied as a cast part and/or forged part.

17. Trailer chassis according to one of Claims 1 to 16, **characterized in that** the shaped part is welded to the upper cord, lower cord and web.

18. Trailer chassis according to one of Claims 1 to 17, **characterized in that** a crossmember is connected to the shaped part by means of joint elements in at least one node region.

19. Trailer chassis according to Claim 18, **characterized in that** bore holes are provided in the longitudinal face of the shaped part for the joint elements.

20. Trailer chassis according to Claim 18 or 19, **characterized in that** the crossmember has an attachment plate (BP) with an essentially vertical attachment face (BF).

21. Trailer chassis according to Claim 20, **characterized in that** the attachment plate is of stepped design and the attachment face is offset with respect to the plane of the connection of the attachment plate to the crossmember, in the direction of the shaped part.

22. Trailer chassis according to Claim 21, **characterized in that** the support faces (AF) for the joint elements bulge out of the attachment face.

23. Trailer chassis according to one of Claims 1 to 22, **characterized in that** a device for connecting a set of running gear is welded onto the underside of the lower cord of the longitudinal member in at least one node region.

24. Trailer chassis according to Claim 23, **characterized in that** the connecting lines of the lower cord of the longitudinal member coincide at least approximately with the shaped part on the one hand and with the device on the other, in a vertical projection in the main part of their extent.

25. Trailer chassis according to Claim 23 or 24, **characterized in that** the device has a flange (RF) which is welded to the lower cord, and an axle support (SI, SA) which is attached to said flange (RF) by means of joint elements and points downwards.

26. Trailer chassis according to Claim 25, **characterized in that** an oblique strut which leads from the axle support to the crossmember has a first section (SSO) which is welded to the crossmember, and a second section (SSU) which is connected to the axle support, and **in that** the first and second sections are connected by means of joint elements.

27. Trailer chassis according to Claim 26, **characterized in that** the second section is connected to a bearing body for an essentially horizontal guide rod bolt which is mounted in the axle support.

28. Trailer chassis according to Claim 27, **characterized in that** the extension of the centre longitudinal axis of the second part of the oblique strut passes through the guide rod bolt, preferably through its longitudinal centre axis.

29. Trailer chassis according to one of Claims 26 to 28, **characterized in that** the lower section of the oblique strut is longer than the upper section.

30. Trailer chassis according to one of Claims 1 to 29, **characterized in that** the upper cord and/or lower cord are made continuous in the longitudinal direction over the interruption in the web.

## Revendications

1. Châssis de remorque comprenant deux poutres longitudinales principales distancées latéralement lesquelles présentent à un tronçon arrière de poutre, en particulier dans la zone de la suspension de la remorque dans son étendue longitudinale prépondérante une ceinture supérieure (OG) et une ceinture inférieure (UG) et une âme verticale plate (ST) raccordant celles-ci et s'étendant essentiellement parallèlement à l'étendue longitudinale des ceintures supérieure et inférieure et lesquelles sont raccordées aux noeuds à des poutres transversales (QT) et/ou à des supports d'essieux, **caractérisé en ce que** l'âme (ST) est interrompue dans la zone d'au moins un noeud dans son étendue parallèle longitudinalement et continue sur une longueur (LK) par un vide et est remplacée par une pièce façonnée (FT,FG) laquelle présente non seulement des surfaces avec des composantes orientées parallèlement à l'étendue longitudinale de l'âme verticale mais aussi des surfaces avec des composantes orientées transversalement à l'étendue longitudinale de l'âme verticale et laquelle franchit le vide entre des tronçons d'âme contiguës (STA, STB) dans le sens longitudinal.

2. Châssis de remorque selon la revendication 1, **caractérisé en ce que** la pièce façonnée (FT) présente au moins une surface longitudinale (LF) s'étendant parallèlement à l'étendue longitudinale (LV) de la poutre longitudinale (LT).

3. Châssis de remorque selon la revendication 1 ou 2, **caractérisé en ce que** la pièce façonnée (FT) présente au moins un tronçon de liaison (VAA, VAB) incliné par rapport à l'étendue longitudinale (LV) de la poutre longitudinale (LT).

4. Châssis de remorque selon la revendication 3, **caractérisé en ce que** le tronçon de liaison est contigu à l'âme (STA, STB) dans un tronçon partiel de la poutre longitudinale voisin de la zone de noeud (KN).

5. Châssis de remorque selon la revendication 3 ou 4, **caractérisé en ce que** le tronçon de liaison (VAA, VAB) s'étend de façon inclinée sous un angle (WV) compris entre 30° et 60° par rapport à l'étendue longitudinale (LV) de la poutre longitudinale.

6. Châssis de remorque selon l'une quelconque des revendications 3 à 4, **caractérisé en ce que** le tronçon de liaison est continué au-delà du plan (SE) de l'âme (STA, STB) par un tronçon de la pièce façonnée formant appendice (FAA, FAB).

7. Châssis de remorque selon la revendication 6, **caractérisé en ce que** le tronçon formant appendice (FAA, FAB) s'étend de façon inclinée en moyenne sous un angle (WF) compris entre 30° et 60° par rapport à l'étendue longitudinale de la poutre longitudinale.

8. Châssis de remorque selon l'une quelconque des revendications 3 à 7, **caractérisé en ce que** le tronçon de liaison (VAA, VAB) est contigu à une surface longitudinale directement ou par l'intermédiaire d'un tronçon de raidissement.

9. Châssis de remorque selon la revendication 8, **caractérisé en ce que** le tronçon de raidissement (AA) présente une surface pliée par rapport au tronçon de liaison et par rapport à la surface longitudinale.

10. Châssis de remorque selon l'une quelconque des revendications 3 à 9, **caractérisé en ce que** deux tronçons de liaison (VAA, VAB) opposés dans le sens longitudinal sont prévus.

11. Châssis de remorque selon l'une quelconque des revendications 1 à 10, **caractérisé en ce que** la surface longitudinale (LF) est décalée latéralement par rapport au plan (SE) de l'âme.

12. Châssis de remorque selon l'une quelconque des revendications 1 à 11, **caractérisé en ce que** la pièce façonnée occupe transversalement à l'étendue longitudinale au moins 60%, en particulier au moins 80 % de la largeur de la poutre longitudinale indiquée par la ceinture supérieure et la ceinture inférieure.

13. Châssis de remorque selon l'une quelconque des revendications 1 à 12, **caractérisé en ce que** la pièce façonnée s'étend en continu verticalement entre la ceinture supérieure et la ceinture inférieure.

14. Châssis de remorque selon l'une quelconque des revendications 1 à 13, **caractérisé en ce que** la pièce façonnée présente une section transversale restant identique verticalement.

15. Châssis de remorque selon l'une quelconque des revendications 1 à 14, **caractérisé en ce que** la pièce façonnée peut être fabriquée par formage à partir d'une plaque plate.

16. Châssis de remorque selon l'une quelconque des revendications 1 à 14, **caractérisé en ce que** la pièce façonnée est exécutée comme pièce coulée et/ou forgée.

17. Châssis de remorque selon l'une quelconque des revendications 1 à 16, **caractérisé en ce que** la pièce façonnée est soudée à la ceinture supérieure, à la ceinture inférieure et à l'âme.

18. Châssis de remorque selon l'une quelconque des revendications 1 à 17, **caractérisé en ce qu'**une poutre transversale est raccordée par l'intermédiaire d'éléments d'assemblage à la pièce façonnée dans au moins une zone de noeud.

19. Châssis de remorque selon la revendication 18, **caractérisé en ce que** des orifices existent pour les éléments d'assemblage dans la surface longitudinale de la pièce façonnée.

20. Châssis de remorque selon la revendications 18 ou 19, **caractérisé en ce que** la poutre transversale présente une plaque de fixation (BP) avec une surface de fixation (BF) essentiellement verticale.

21. Châssis de remorque selon la revendication 20, **caractérisé en ce que** la plaque de fixation est exécutée en forme de gradins et **en ce que** la surface de fixation est décalée par rapport au plan de la liaison de la plaque de fixation à la poutre transversale vers la pièce façonnée.

22. Châssis de remorque selon la revendication 21, **caractérisé en ce que** les surfaces d'application (AF) pour les éléments d'assemblage provenant de la surface de fixation sont bombées

23. Châssis de remorque selon l'une quelconque des revendications 1 à 22, **caractérisé en ce que** dans au moins une zone de noeud un dispositif de liaison d'une suspension est soudé sur le coté inférieur de la ceinture inférieure de la poutre longitudinale.

24. Châssis de remorque selon la revendication 23,
**caractérisé en ce que** les lignes de liaison de la ceinture inférieure de la poutre à la pièce façonnée d'une part et au dispositif d'autre part coïncident au moins approximativement en projection verticale dans leur étendue prépondérante.

25. Châssis de remorque selon l'une quelconque des revendication 23 ou 24, **caractérisé en ce que** le dispositif présente une bride (RF) soudée à la ceinture inférieure et un support d'essieu (SI,SA) fixé à celle-ci par l'intermédiaire d'éléments d'assemblage et indiquant le bas.

26. Châssis de remorque selon la revendications 25, **caractérisé en ce qu'**une traverse inclinée conduisant du support d'essieu à la poutre transversale présente un premier tronçon (SSO) qui est soudé à la poutre transversale, et un second tronçon (SSU) qui est raccordé au support d'essieu, et **en ce que** les premier et second tronçons sont reliés par des éléments d'assemblage.

27. Châssis de remorque selon la revendication 26, **caractérisé en ce que** le second tronçon est raccordé à un corps de logement pour un boulon de guidage essentiellement horizontal logé dans le support d'essieu.

28. Châssis de remorque selon la revendication 27, **caractérisé en ce que** le prolongement de l'axe longitudinal central de la seconde partie de la traverse inclinée par le boulon de guidage passe de préférence par son axe longitudinal central.

29. Châssis de remorque selon l'une quelconque des revendications 26 à 28, **caractérisé en ce que** le tronçon inférieur de la traverse inclinée est plus long que le tronçon supérieur.

30. Châssis de remorque selon l'une quelconque des revendications 1 à 29, **caractérisé en ce que** la ceinture supérieure et/ou la ceinture inférieure sont exécutées de façon continue dans le sens longitudinal sur l'interruption de l'âme.
